# EUROPÄISCHE PATENTSCHRIFT

(11) **EP 2 811 158 B1**
(45) Veröffentlichungstag und Bekanntmachung des Hinweises auf die Patenterteilung: **28.03.2018**
(21) Anmeldenummer: 14183764.1
(22) Anmeldetag: 12.04.2002
(51) Int. Cl.: F03D 9/00, F03D 7/02, F03D 7/04, F03D 9/25

(54) **Verfahren zum Betrieb einer Windenergieanlage**
Method for operating a wind energy plant
Procédé d'exploitation d'une installation d'énergie éolienne

(30) Priorität: 20.04.2001 DE 10119624; 04.08.2001 DE 10138399
(43) Veröffentlichungstag der Anmeldung: 10.12.2014
(62) Teilanmeldung aus: 10174991.9
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- EP-A- 0 677 911
- WO-A1-93/11604
- WO-A1-99/52193
- DE-A1- 19 756 777
- SU-A1- 1 455 039
- MITSUTOSHI YAMAMOTO ET AL: "ACTIVE AND REACTIVE POWER CONTROL FOR DOUBLY-FED WOUND ROTOR INDUCTION GENERATOR", IEEE TRANSACTIONS ON POWER ELECTRONICS, IEEE SERVICE CENTER, PISCATAWAY, NJ, US, Bd. 6, Nr. 4, 1. Oktober 1991 (1991-10-01) , Seiten 624-629, XP000248873, ISSN: 0885-8993, DOI: 10.1109/63.97761

## Beschreibung

Die vorliegende Erfindung betrifft ein Verfahren zum Betreiben einer Windenergieanlage mit einem von einem Rotor antreibbaren elektrischen Generator zum Abgeben elektrischer Leistung an einen elektrischen Verbraucher, insbesondere ein elektrisches Netz.

Die Erfindung betrifft ferner eine Windenergieanlage mit einem Rotor und einem mit dem Rotor gekoppelten elektrischen Generator zum Abgeben elektrischer Leistung an einen elektrischen Verbraucher, insbesondere ein elektrisches Netz.

Bei den bekannten Windenergieanlagen zum Erzeugen elektrischer Energie aus Windenergie wird der Generator mit dem elektrischen Verbraucher, häufig einem elektrischen Netz, im Parallelbetrieb betrieben. D.h., so lange das Windangebot mit einer ausreicht, wird die Windenergieanlage elektrische Energie erzeugen und in das Netz einspeisen.

Kommt es jedoch im Netz zu einer Störung, z.B. infolge eines Kurzschlusses im Netz, werden die Windenergieanlagen bislang von dem Netz getrennt und erst nach dem Wiederherstellen normaler Betriebsbedingungen an das Netz angeschaltet.

Dadurch ist ein rasches Stützen des Netzes nach dem Auftreten einer Störung, welches insbesondere bei großen Spannungs- bzw. Leistungsbedarfs-Schwankungen erforderlich ist, nicht mehr möglich Ein Beispiel aus dem Stand der Technik ist aus WO9952193 bekannt. Aufgabe der vorliegenden Erfindung ist es daher, eine Steuerung für eine oder mehrere Windenergieanlagen anzugeben, welche Schwankungen im Netz weitestmöglich entgegenwirkt.

Diese Aufgabe wird gemäß einem Verfahren der eingangs genannten Art dadurch gelöst, dass die von dem Generator an den Verbraucher abgegebene Leistung in Abhängigkeit von einem an den Verbraucher abgegebenen Strom geregelt wird.

Bei einer Vorrichtung der eingangs genannten Art wird die Aufgabe gelöst durch eine Regelungseinrichtung mit einem Stromaufnehmer zum Aufnehmen eines an den Verbraucher abgegebenen elektrischen Stromes, so dass die von dem Generator an den Verbraucher abgegebene Leistung in Abhängigkeit von dem von dem Stromaufnehmer aufgenommenen Strom regelbar ist.

Auf diese Weise kann bei schwankenden Leistungsanforderungen aus dem Netz die benötigte Leistung erzeugt und eingespeist werden.

Um im Falle einer Störung im Netz, z.B. in Folge eines Kurzschlusses im Netz, eine Überlastung von Teilen der Windenergieanlage und/oder des Netzes zu vermeiden, wird die Windenergieanlage derart gesteuert, dass der an das Netz abgegebene Strom einen vorgegebenen Wert nicht überschreitet.

In einer besonders bevorzugten Ausführungsform der Erfindung wird die Höhe dieses maximal abgebbaren Stromes für jede Phase des Netzes geregelt, um einerseits das Netz so weit wie möglich stützen zu können, ohne andererseits Komponenten der Gefahr einer Schädigung auszusetzen.

Besonders bevorzugt kann dabei durch einen externen Eingang die Windenergieanlage entsprechend den Vorgaben einer entfernten Steuerungszentrale betrieben werden. Auf diese Weise kann z.B. ein Energieversorgungsunternehmen von der Windenergieanlage den gerade zur Netzstützung benötigten Strom abfordern.

Weitere vorteilhafte Ausführungsformen sind in den Unteransprüchen angegeben.

Nachfolgend wird eine Ausführungsform der Erfindung anhand der Figuren näher beschrieben. Dabei zeigen:
- Fig. 1: eine in ein Netz einspeisende Windenergieanlage in einer vereinfachten Darstellung;
- Fig. 2: eine erfindungsgemäße Regelungseinrichtung zum Betreiben einer Windenergieanlage; und
- Fig. 3: ein Blockschaltbild wesentlicher Bestandteile der Steuerungs- und Regelungsanordnung.

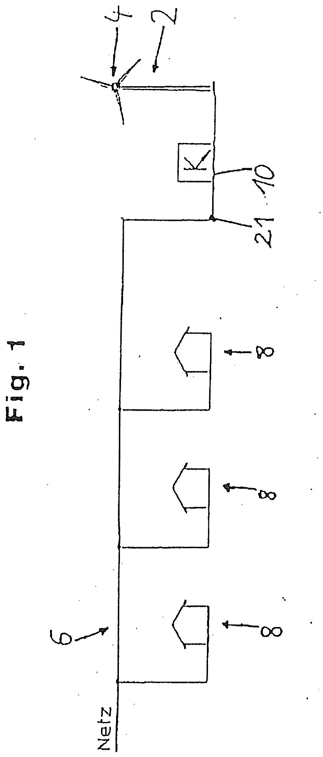

Eine in Fig. 1 vereinfacht dargestellte Windenergieanlage 2 mit einem Rotor 4 ist mit einem elektrischen Netz 6 verbunden, das beispielsweise ein öffentliches Netz sein kann. An das Netz sind mehrere elektrische Verbraucher 8 angeschlossen. Der in Fig. 1 nicht dargestellte elektrische Generator der Windenergieanlage 2 ist mit einer elektrischen Steuerungs- und Regelungs-Anordnung 10 gekoppelt, die den in dem Generator erzeugten Wechselstrom zunächst gleichrichtet und anschließend in einen Wechselstrom mit einer der Netzfrequenz entsprechenden Frequenz umwandelt. Anstelle eines Netzes 6 könnte auch ein einzelner Verbraucher von der Windenergieanlage 2 mit elektrischer Energie versorgt werden. Die Steuerungs- und Regelungsanordnung 10 weist eine erfindungsgemäße Regelungseinrichtung auf.

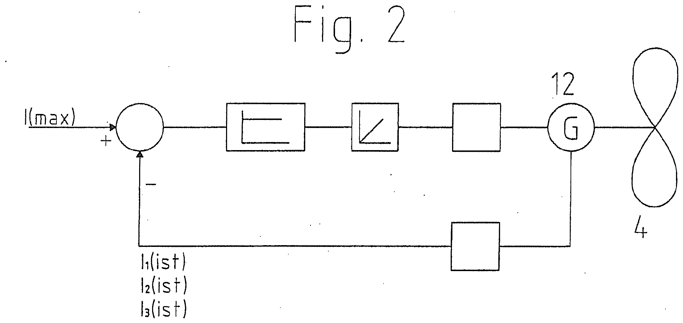

Fig. 2 veranschaulicht die erfindungsgemäße Regelungseinrichtung. Der vereinfacht dargestellte Rotor 4 ist mit einem Generator 12 gekoppelt, der eine elektrische Leistung bereitstellt, die von der Windgeschwindigkeit und somit der Windleistung abhängt. Der in dem Generator 12 erzeugte Wechselstrom wird zunächst gleichgerichtet und anschließend in einen Wechselstrom umgewandelt, der eine der Netzfrequenz entsprechende Frequenz aufweist.

Mit Hilfe eines Stromaufnehmers (nicht dargestellt) wird der in das Netz 6 (Fig. 1) eingespeiste Strom ermittelt. Dabei wird der Strom mit einem vorgegebenen Wert I(max) verglichen.

Überschreitet nun der in das Netz 6 eingespeiste Strom den vorgegebenen Maximalwert I(max), wird durch die Regelungseinrichtung die von der gesamten Windenergieanlage (und/oder deren Generator) erzeugte Leistung so eingestellt, dass der eingespeiste Strom den vorgegebenen Grenzwert I(max) nicht überschreitet. Bei einem Kurzschluss kann dies beispielsweise dadurch geschehen, dass die Windenergieanlage eine deutlich geringere Leistung als zuvor in das Netz einspeist, die damit nicht ins Netz eingespeiste Leistung aber anderweitig außerhalb des Netzes einsetzt, beispielsweise für einen Dumpload (Widerstand) oder die Einspeisung der nicht in das Netz abgegebenen Leistung in Kondensatoren oder andere Zwischenspeicher. Sobald das Netz dann wieder vollständig zur Verfügung steht, kann auch die gespeicherte Energie ins Netz wieder abgegeben werden.

Auf diese Weise kann selbst bei einem Kurzschluss im Netz die Windenergieanlage weiterhin Leistung an das Netz abgeben und das Netz stützen, ohne dass in Folge des Kurzschlusses der Strom den vorgegebenen Grenzwert überschreitet.

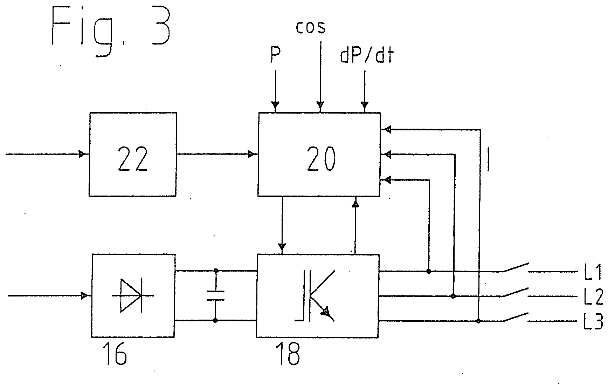

Fig. 3 zeigt Bestandteile der Steuerungs- und Regelungsanordnung 10 in Fig. 1. Die Steuerungs- und Regelungsanordnung 10 weist einen Gleichrichter 16 auf, in dem der von dem Generator erzeugte Wechselstrom gleichgerichtet wird. Ein mit dem Gleichrichter 16 verbundener Wechselrichter 18 wandelt den Gleichstrom wiederum in einen Wechselstrom um, der eine der Netzfrequenz entsprechende Frequenz aufweist. Dieser Strom wird über drei Phasen L1, L2 und L3 in das Netz 6 eingespeist. Der Wechselrichter 18 wird mit Hilfe eines Mikrocomputers 20, der Teil der Regelungseinrichtung ist, gesteuert. Dazu ist der Mikroprozessor 20 mit dem Wechselrichter 18 gekoppelt. Als Eingangsgrößen für die Regelung des Stromes, mit dem die von der Windenergieanlage 2 zur Verfügung gestellte elektrische Leistung in das Netz 6 eingespeist wird, sind der aktuelle Strom bzw. die aktuellen Ströme, die Netzfrequenz, die elektrische Leistung P des Generators, der Leistungsfaktor cos _ sowie der Leistungsgradient dP/dt vorgesehen. In dem Mikroprozessor 20 wird die erfindungsgemäße Regelung des einzuspeisenden Stromes verwirklicht. Dabei wird der Strom auf jeder der Phasen L1, L2 und L3 separat erfasst und mit seinem Betrag in der erfindungsgemäßen Regelung berücksichtigt.

Steigt nunmehr der gemessene Strom(betrag) I(ist) einer Phase über einen vorbestimmten Maximalwert an, wird der Wechselrichter 18 so gesteuert, dass der Strom(betrag) unter den vorgegebenen Maximalstroms I(max) sinkt und die dann erzeugte elektrische Energie aus Windenergie, die aufgrund der Strombegrenzung nicht ins Netz eingespeist wird, wird anderweitig verwendet, beispielsweise über einen Widerstand (Dumpload) gegeben oder in einem Zwischenspeicher (z.B. Kondensator, Ultracap) gespeichert.

Dabei kann die Steuerung der Windenergieanlage selbsttätig arbeiten. Die Windenergieanlage erfasst dann einen Kurzschluss im Netz z.B. durch die Überwachung der Spannungen der einzelnen Phasen des Netzes und/oder deren Phasenlage. Werden für Spannungen und/oder Phasendifferenzen vorgebbare Grenzwerte erreicht, erkennt die Windenergieanlage einen Kurzschluss und arbeitet nach einem für diesen Fall vorgesehen Algorithmus.

Durch den externen Zugang (22) ergibt sich, z.B. für das Energieversorgungsunternehmen, an dessen Netz die Windenergieanlage angeschlossen ist, die Möglichkeit besteht, in den Betrieb der Windenergieanlage einzugreifen und beispielsweise den Betrag des einzuspeisenden Stromes, die Art des Stromes (Wirkstrom, Blindstrom) und/oder den Phasenwinkel und/oder Phasenlage usw. zu verändern. Auf diese Weise kann das Energieversorgungsunternehmen genau diejenigen Werte (den Strom, die Spannung, die elektrische Leistung) für die von der Windenergieanlage in das Netz einzuspeisende Leistung einstellen, die dem Bedarf des Netzbetreibers entsprechen.

## Patentansprüche

1. Verfahren zum Betreiben einer Windenergieanlage mit einem von einem Rotor antreibbaren elektrischen Generator zum Abgeben elektrischer Leistung an einen elektrischen Verbraucher, nämlich ein elektrisches Netz, wobei die von dem Generator (12) an den Verbraucher (6) abgegebene Leistung in Abhängigkeit von einem an dem Verbraucher (6) abgegebenen Strom geregelt wird,
wobei der abgegebene Strom einen vorgebbaren Betrag nicht überschreitet, eine vorgebbare Phasenlage aufweist und/oder einen vorgebbaren Blindstrom-Anteil enthält,
bei mehrphasigen Systemen Betrag, Phasenlage und/oder Blindstrom-Anteil für jede Phase den vorgebbaren Wert nicht überschreiten
wobei die Windenergieanlage über einen externen Steuereingang verfügt, mittels welchem Schaltbefehle vom Netzbetreiber oder Energieversorger, der das Netz betreibt, empfangen werden und in Abhängigkeit dieser Steuersignale vom Netzbetreiber die Windenergieanlage nach Bedarf des Netzbetreibers gesteuert wird und somit elektrische Leistung, beispielsweise die Wirkleistung, Blindleistung, Stromlage, Spannungslage oder Phasenlage in einer Form in das Netz eingespeist wird, wie dies vom Netzbetreiber erfordert wird,
dass der abgegebene Strom ein Wechselstrom mit vorgebbarer Frequenz ist und dass die vorgebbare Frequenz bevorzugt im Wesentlichen der Netzfrequenz entspricht, und dass dann, wenn der von dem Generator an den Verbraucher abgegebene Strom einen vorgebbaren Maximalwert (I(max)) überschreitet, mittels einer Regelungseinrichtung der Windenergieanlage, die von der gesamten Windenergieanlage und/oder deren Generator erzeugte Leistung so eingestellt wird, dass der eingespeiste Strom den vorgegebenen Maximalwert (I(max)) nicht überschreitet, wobei bei einem Kurzschluss im Netz dies dadurch geschieht, dass die Windenergieanlage eine deutlich geringere Leistung als zuvor in das Netz einspeist, die damit nicht in das Netz eingespeiste Leistung aber anderweitig außerhalb des Netzes einsetzt, beispielsweise für einen Dumpload (Widerstand) oder die Einspeisung der nicht in das Netz abgegebenen Leistung in Kondensatoren oder anderen Zwischenspeichern erfolgt,
und dass dann, wenn das Netz wieder vollständig zur Verfügung steht, auch die gespeicherte Energie an das Netz abgegeben wird.

2. Verfahren nach Anspruch 1,
**dadurch gekennzeichnet, dass** die von dem Generator (12) an den Verbraucher abgegebene Leistung in Abhängigkeit von dem Betrag des an den Verbraucher abgegebenen Stroms geregelt wird.

3. Verfahren nach Anspruch 1,
**dadurch gekennzeichnet, dass** für jede Phase ein von den übrigen Phasen unabhängiger Wert vorgebbar ist.

4. Verfahren nach einem der vorstehenden Ansprüche,
**dadurch gekennzeichnet, dass** der Strom für jede von einem Kurzschluss betroffene Phase auf dem Momentanwert im Moment des Kurzschlusses begrenzt wird.

5. Windenergieanlage, wobei die Windenergieanlage eingerichtet ist, ein Verfahren nach einem der Ansprüche 1 bis 4 auszuführen, mit einem Rotor und einem mit dem Rotor gekoppelten elektrischen Generator zum Abgeben elektrischer Leistungen an ein elektrisches Netz, **gekennzeichnet durch** eine Regelungseinrichtung mit einem Stromaufnehmer zum Aufnehmen des an ein Netz (6) abgegebenen elektrischen Stromes, so dass die von dem Generator an das Netz (6) abgegebene Leistung in Abhängigkeit von dem durch den Stromaufnehmer aufgenommenen Strom regelbar ist.

6. Windenergieanlage nach Anspruch 5,
**dadurch gekennzeichnet, dass** die Regelungseinrichtung einen Mikroprozessor (20) aufweist und einen externen Steuerungseingang (22) zur Übergabe von Daten an die Regelungseinrichtung.

7. Windenergieanlage nach einem der Ansprüche 5 - 6,
**gekennzeichnet durch** eine Vorrichtung zur Erfassung eines Kurzschlusses im Netz.

8. Windenergieanlage nach Anspruch 7,
**gekennzeichnet durch** eine Spannungserfassungseinrichtung zum Erfassen der Spannung wenigstens einer Phase im Netz.

9. Windenergieanlage nach Anspruch 7 oder 8,
**gekennzeichnet durch** einen Phasenwächter zum Erfassen der Phasenlage der Ströme und/oder Spannungen wenigstens einer Phase im Netz.

10. Windenergieanlage nach einem der Ansprüche 5 bis 9 mit einem Generator zum Abgeben elektrischer Leistung an ein elektrisches Netz, **dadurch gekennzeichnet, dass** die Windenergieanlage am Netz bleibt, wenn sich im Netz ein Kurzschluss oder eine vergleichbare Betriebsstörung einstellt, beispielsweise die Spannung einen Wert annimmt, der mehr als 20% und bevorzugt mehr als 40% vom Sollwert abweicht.

11. Windenergieanlage nach einem der Ansprüche 5 bis 10 mit einem Generator zum Abgeben elektrischer Leistung an ein elektrisches Netz und einem externen Steuereingang mit Übergabe von Daten an eine Regelungseinrichtung der Windenergieanlage, wobei über den externen Steuereingang Schaltbefehle vom Netzbetreiber oder Energieversorger, der das Netz betreibt, empfangen werden und in Abhängigkeit dieser Steuersignale vom Netzbetreiber die Windenergieanlage nach Bedarf des Netzbetreibers gesteuert wird und somit elektrische Leistung, beispielsweise die Wirkleistung, Windleistung, Stromlage, Spannungslage oder Phasenlage in einer Form in das Netz eingespeist wird, wie dies vom Netzbetreiber erfordert wird.

## Claims

1. Method for operation of a wind energy installation having an electrical generator, which can be driven by a rotor, for emission of electrical power to an electrical load, specifically an electrical grid, wherein the power which is emitted from the generator (12) to the load (6) is regulated as a function of a current which is emitted to the load (6),
wherein the emitted current does not exceed a predeterminable magnitude, has a predeterminable phase angle and/or comprises a predeterminable reaction current component, in the case of polyphase systems, the magnitude, phase angle and/or reaction current component do not exceed the predeterminable value for each phase, wherein the wind energy installation has an external control input by means of which switching commands from the grid operator or power supply authority who is operating the grid are received and the wind energy installation is controlled in accordance with the grid operator's requirement as a function of these control signals from the grid operator, so that electrical power, for example the real power, reaction power, current level, voltage level or phase angle, are fed into the grid in a form as required by the grid operator, in that the emitted current is an alternating current at predeterminable frequency and in that the predeterminable frequency preferably corresponds essentially to the grid frequency, and in that, when the current emitted from the generator to the load exceeds a predeterminable maximum value (I(max)), a control device of the wind energy installation is used to adjust the power that is produced by the overall wind energy installation and/or its generator such that the current which is fed in does not exceed the predetermined maximum value (I(max)), wherein, in the event of a short circuit in the grid, this is effected by the wind energy installation feeding considerably less power into the grid than before, but using the power which is thus not fed into the grid in some other way outside the grid, for example for a dump load (resistance) or for feeding the power that is not emitted into the grid to capacitors or other buffer stores, and in that, when the grid is completely available once again, the stored energy is also emitted to the grid.

2. Method according to Claim 1,
**characterized**
**in that** the power which is emitted from the generator (12) to the load is regulated as a function of the magnitude of the current which is emitted to the load.

3. Method according to Claim 1,
**characterized**
**in that** a value which is independent of the other phases can be predetermined for each phase.

4. Method according to one of the preceding claims,
**characterized**
**in that** the current for each phase which is affected by a short circuit is limited to the instantaneous value at the moment of the short circuit.

5. Wind energy installation, the wind energy installation being configured to carry out a method according to one of Claims 1 to 4, having a rotor and having an electrical generator which is coupled to the rotor for emission of electrical powers to an electrical grid, **characterized by** a control device with a current sensor for sensing the electric current which is emitted to a grid (6), so that the power which is emitted from the generator to the grid (6) can be regulated as a function of the current which is sensed by the current sensor.

6. Wind energy installation according to Claim 5,
**characterized**
**in that** the control device has a microprocessor (20) and an external control input (22) for transferring data to the control device.

7. Wind energy installation according to one of Claims 5 - 6,
**characterized**
**by** an apparatus for detection of a short circuit in the grid.

8. Wind energy installation according to Claim 7,
**characterized**
**by** a voltage detection device for detection of the voltage in at least one phase in the grid.

9. Wind energy installation according to Claim 7 or 8,
**characterized**
**by** a phase monitor for detection of the phase angle of the currents and/or voltages in at least one phase in the grid.

10. Wind energy installation according to one of Claims 5 to 9, having a generator for emission of electrical power to an electrical grid,
**characterized**
**in that** the wind energy installation remains connected to the grid when a short circuit or a comparable operating disturbance occurs in the grid, for example with the voltage assuming a value which differs by more than 20% and preferably by more than 40% from the nominal value.

11. Wind energy installation according to one of Claims 5 to 10, having a generator for emission of electrical power to an electrical grid and having an external control input with transfer of data to a control device for the wind energy installation, wherein switching commands from the grid operator or power supply authority who is operating the grid are received via the external control input and the wind energy installation is controlled in accordance with the grid operator's requirement as a function of these control signals from the grid operator, so that electrical power, for example the real power, wind power, current level, voltage level or phase angle, are fed into the grid in a form as required by the grid operator.

## Revendications

1. Procédé d'exploitation d'une installation d'énergie éolienne avec un générateur électrique pouvant être entraîné par un rotor pour fournir une puissance électrique à un consommateur électrique, à savoir un réseau électrique, dans lequel la puissance fournie par le générateur (12) au consommateur (6) est régulée en fonction d'un courant fourni au consommateur (6),
dans lequel le courant fourni ne dépasse pas une valeur pouvant être prédéfinie, présente une position de phase pouvant être prédéfinie et/ou contient une part de courant réactif pouvant être prédéfinie, dans le cas de systèmes à plusieurs phases, la valeur, la position de phase et/ou la part de courant réactif pour chaque phase ne dépassent pas la valeur pouvant être prédéfinie
dans lequel l'installation d'énergie éolienne dispose d'une entrée de commande externe, au moyen de laquelle des commandes de commutation de l'exploitant de réseau ou du fournisseur d'énergie, qui exploite le réseau, sont reçues et l'installation d'énergie éolienne est commandée selon les besoins de l'exploitant de réseau en fonction de ces signaux de commande de l'exploitant de réseau et ainsi la puissance électrique, par exemple la puissance active, la puissance réactive, la position de courant, la position de tension ou la position de phase, est injectée sous une forme dans le réseau, comme le demande l'exploitant de réseau,
que le courant fourni est un courant alternatif avec fréquence pouvant être prédéfinie et que la fréquence pouvant être prédéfinie correspond de préférence sensiblement à la fréquence de réseau, et qu'alors, lorsque le courant fourni par le générateur au consommateur dépasse une valeur maximale pouvant être prédéfinie (I(max)), la puissance générée par l'ensemble de l'installation d'énergie éolienne et/ou son générateur est réglée au moyen d'un dispositif de régulation de l'installation d'énergie éolienne de sorte que le courant injecté ne dépasse pas la valeur maximale prédéfinie (I(max)), dans lequel, dans le cas d'un court-circuit dans le réseau, cela se passe par le fait que l'installation d'énergie éolienne injecte une puissance nettement plus faible qu'auparavant dans le réseau, mais utilise la puissance ainsi non injectée dans le réseau autrement en dehors du réseau, par exemple pour une charge de décharge (résistance) ou l'injection de la puissance non fournie dans le réseau a lieu dans des condensateurs ou d'autres accumulateurs intermédiaires,
et qu'alors, lorsque le réseau est à nouveau entièrement disponible, l'énergie accumulée est également fournie au réseau.

2. Procédé selon la revendication 1,
**caractérisé en ce que** la puissance fournie par le générateur (12) au consommateur est régulée en fonction de la valeur du courant fourni au consommateur.

3. Procédé selon la revendication 1,
**caractérisé en ce qu'**une valeur indépendante des autres phases peut être prédéfinie pour chaque phase.

4. Procédé selon l'une quelconque des revendications précédentes,
**caractérisé en ce que** le courant est limité pour chaque phase concernée par un court-circuit à la valeur instantanée au moment du court-circuit.

5. Installation d'énergie éolienne, dans laquelle l'installation d'énergie éolienne est agencée pour mettre en oeuvre un procédé selon l'une quelconque des revendications 1 à 4, avec un rotor et un générateur électrique couplé au rotor pour fournir des puissances électriques à un réseau électrique, **caractérisée par** un dispositif de régulation avec un capteur de courant pour capter le courant électrique fourni à un réseau (6), si bien que la puissance fournie par le générateur au réseau (6) peut être régulée en fonction du courant capté par le capteur de courant.

6. Installation d'énergie éolienne selon la revendication 5,
**caractérisée en ce que** le dispositif de régulation présente un microprocesseur (20) et une entrée de commande externe (22) pour la transmission de données au dispositif de régulation.

7. Installation d'énergie éolienne selon l'une quelconque des revendications 5-6,
**caractérisée par** un dispositif de détection d'un court-circuit dans le réseau.

8. Installation d'énergie éolienne selon la revendication 7,
**caractérisée par** un dispositif de détection de tension pour la détection de la tension d'au moins une phase dans le réseau.

9. Installation d'énergie éolienne selon la revendication 7 ou 8,
**caractérisée par** un contrôleur de phase pour la détection de la position de phase des courants et/ou tensions d'au moins une phase dans le réseau.

10. Installation d'énergie éolienne selon l'une quelconque des revendications 5 à 9 avec un générateur pour fournir une puissance électrique à un réseau électrique, **caractérisée en ce que** l'installation d'énergie éolienne reste sur le réseau, lorsqu'un court-circuit ou un dysfonctionnement comparable s'établit dans le réseau, par exemple la tension adopte une valeur réduite de plus de 20 % et de préférence de plus de 40 % de la valeur de consigne.

11. Installation d'énergie éolienne selon l'une quelconque des revendications 5 à 10 avec un générateur pour fournir une puissance électrique à un réseau électrique et une entrée de commande externe avec transmission de données à un dispositif de régulation de l'installation d'énergie éolienne, dans laquelle des commandes de commutation de l'exploitant de réseau ou du fournisseur d'énergie, qui exploite le réseau, sont reçues par le biais de l'entrée de commande externe et l'installation d'énergie éolienne est commandée selon les besoins de l'exploitant de réseau en fonction de ces signaux de commande de l'exploitant de réseau et ainsi la puissance électrique, par exemple la puissance active, la puissance éolienne, la position de courant, la position de tension ou la position de phase est injectée sous une forme dans le réseau, comme le demande l'exploitant de réseau.
